# EUROPEAN PATENT APPLICATION

(11) **EP 1 243 405 A1**
(43) Date of publication of application: **25.09.2002**
(21) Application number: 01302594.5
(22) Date of filing: 21.03.2001
(51) Int. Cl.: B29D 31/512, A43B 3/12, A43B 13/12

(54) **Method for making a shoe having a foamed midsole enclosed in the shoe**

(71) Applicant: Chi, Cheng-Hsian, Taichung City (TW)
(72) Inventor: Chi, Cheng-Hsian, Taichung City (TW)
(74) Representative: Alexander, Thomas Bruce

(57) **Abstract**

A method for making a shoe includes the steps of preparing an outsole (20), an upper (30) having an insole (301), a cover strip (21), and a mold (100), placing the outsole (20), the upper (30), and the cover strip (21) in the mold (100) such that the outsole (20) and the insole (301) are interconnected by the cover strip (21) to confine an inner space (22) thereamong, closing the mold (100), filling a foamable material into the inner space (22), and permitting the foamable material to expand to form a foamed midsole (40) that is enclosed by and that is bonded to the outsole (20), the insole (301) and the cover strip (21).

## Description

This invention relates to a method for making a shoe having a foamed midsole, more particularly to a method for making a shoe having an outsole, an insole, and a foamed midsole bonded to and enclosed by the outsole and the insole.

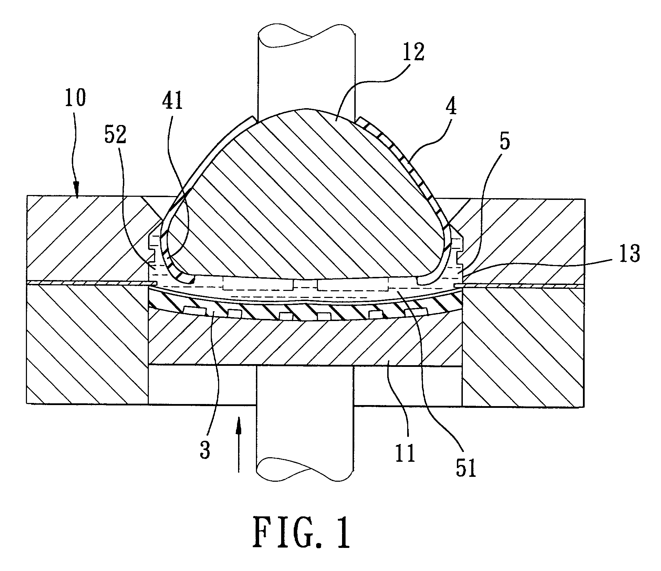

Fig. 1 illustrates a conventional method for making a shoe including an upper 4, an outsole 3, and a midsole 5 interconnecting the upper 4 and the outsole 3. The midsole 5 has a base portion 51 in contact with and bonded to the outsole 3, and an upper flange portion 52 extending upwardly from the base portion 51 and bonded to a bottom portion 41 of the upper 4. The method employs a mold 10 including an upper mold part with a last 12, a bottom mold part 11, and side mold parts, which define a mold cavity 13. The midsole 5 is formed by filling a foamable material, such as polyurethane, into a portion of the mold cavity 13 that is defined by the outsole 3 which is laid on an inner wall of the bottom mold part 11, a bottom portion of the last 12, the bottom portion 41 of the upper 4 which is sleeved on the bottom portion of the last 12, and inner walls of the side mold parts, and permitting the foamable material to expand so as to form a foamed body of the midsole 5 in the mold cavity 13.

The midsole 5 normally includes filler (not shown) in the form of pellets which are disposed on the outsole 3 in the mold cavity 13 before the closing of the mold parts and which are enclosed by the foamed body during the formation of the same.

The conventional method for making the shoe is disadvantageous in that the pellets of the filler tend to move around in the portion of the mold cavity 13 upon filling of the foamable material . As a consequence, some of the pellets may protrude outwardly from an outer surface of the upper flange portion 52 of the midsole 5, thereby adversely affecting the appearance of the shoe. Moreover, since the upper flange portion 52 of the midsole 5 is exposed to the environment, it tends to deteriorate and discolor.

Therefore, the object of the present invention is to provide a method for making a shoe that is capable of overcoming the aforementioned drawbacks.

According to the present invention, a method for making a shoe comprises the steps of: preparing an outsole having an upper surface and a peripheral portion; preparing an upper having a bottom portion that defines an insole having a peripheral portion which is to be disposed over the peripheral portion of the outsole; preparing a cover strip that is to be disposed between and that is to interconnect the outsole and the insole; preparing a mold that has an inner wall defining a mold cavity, an upper mold part with a last, a bottom mold part opposite to the upper mold part, and at least two opposite side mold parts; placing the outsole, the upper and the cover strip in the mold cavity such that the outsole is mounted on the bottom mold part, that the upper is fittingly sleeved on the last with the insole being disposed over the outsole, and that the peripheral portions of the insole and the outsole are interconnected by the cover strip so as to confine an inner space thereamong; closing the mold; filling a foamable material into the inner space; and permitting the foamable material in the inner space to expand to thereby force the outsole, the insole and the cover strip to press against the inner wall of the mold so as to form a foamed midsole that is enclosed by and that is bonded to the outsole, the insole and the cover strip.

In the drawings which illustrate an embodiment of the invention,
Fig. 1 is a cross-sectional side view to illustrate a conventional method for making a shoe;
Fig. 2 is a block diagram to show consecutive steps of a method embodying this invention for making a shoe;
Figs. 3 and 4 illustrate how a foamed midsole of the shoe is formed in a mold according to the method of this invention;
Fig. 5 is a fragmentary cross-sectional side view to illustrate cushioning pads which can be optionally embedded in the foamed midsole of Fig. 4 according to the method of this invention;
Fig. 6 is a fragmentary cross-sectional side view to illustrate the cushioning pads of Fig. 5 in the form of air units that can be exposed from the shoe; and
Figs. 7 to 9 illustrate how a sandal is made according to the method of this invention.

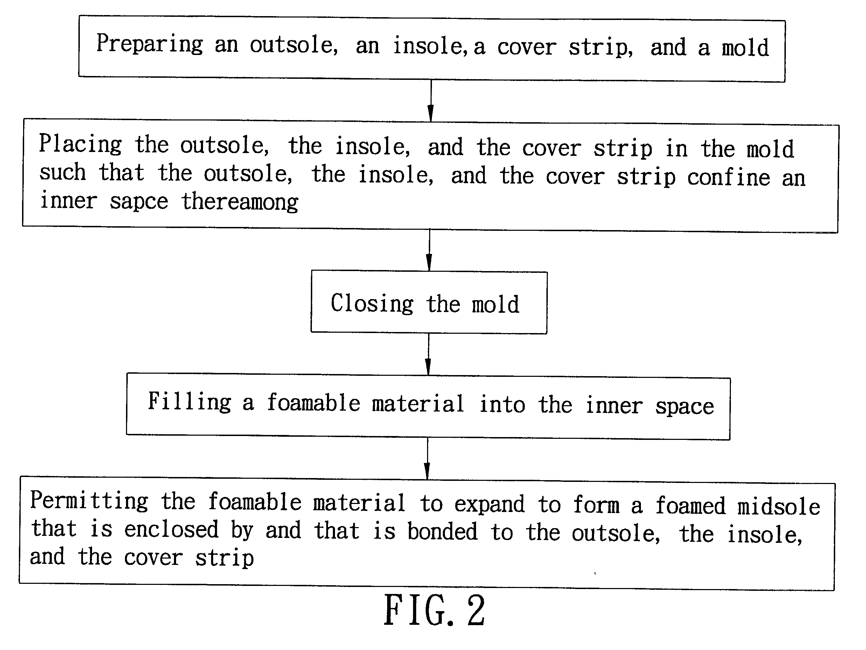

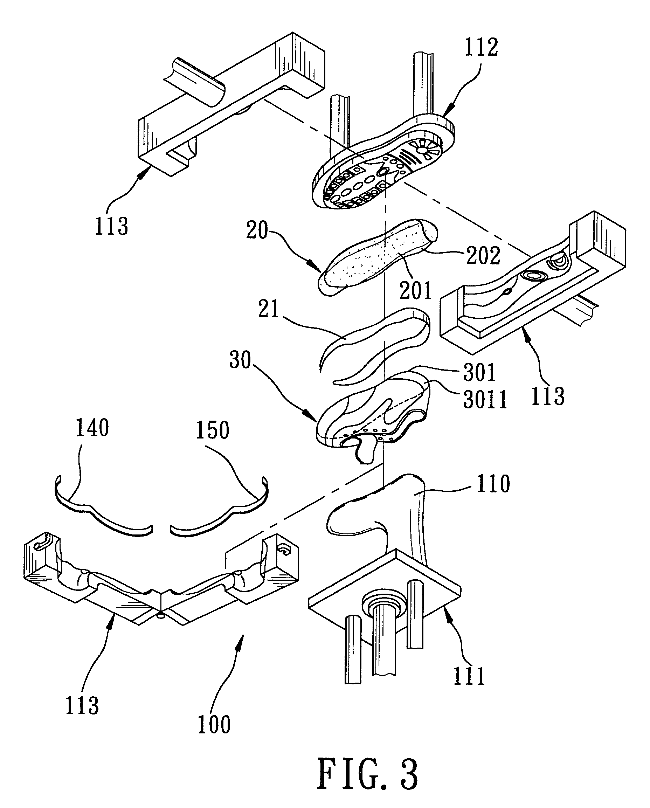

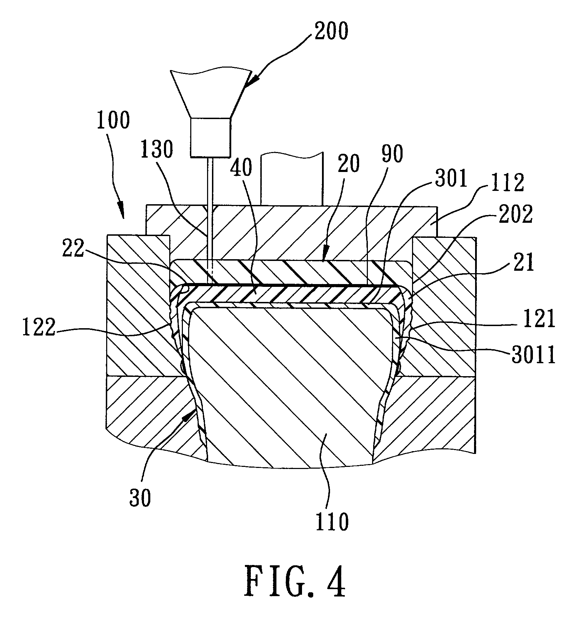

Fig. 2 shows consecutive steps of a method embodying this invention for making a shoe. Figs. 3 to 5, illustrate how a foamed midsole 40 of the shoe is formed according to the method of this invention. The method includes the steps of : preparing an outsole 20 having an upper surface 201 and a peripheral portion 202; applying an adhesive layer (90) onto the upper surface 201 of the outsole 20; preparing an upper 30 having a bottom portion that defines an insole 301 having a peripheral portion 3011 which is to be disposed over the peripheral portion 202 of the outsole 20; preparing a cover strip 21 that is to be disposed between and that is to interconnect the outsole 20 and the insole 301; preparing a mold 100 that has an inner wall 121 defining a mold cavity 122, an upper mold part 111 with a last 110, a bottom mold part 112 opposite to the upper mold part 111, and at least two opposite side mold parts 113; heating the mold 100 to a molding temperature; placing the outsole 20, the upper 30 and the cover strip 21 in the mold cavity 122 such that the outsole 20 is mounted on the bottom mold part 112, that the upper 30 is fittingly sleeved on the last 110 with the insole 301 being disposed over the outsole 20, and that the peripheral portions 3011, 202 of the insole 301 and the outsole 20 are interconnected by the cover strip 21 so as to confine an inner space 22 thereamong; closing the mold 100; filling a gas into the inner space 22 so as to force the outsole 20, the insole 301, and the cover strip 21 to press against the inner wall 121 of the mold 100; filling a foamable material into the inner space 22 by injecting the foamable material from a feeding device 200 through a channel 130 that extends through the bottom mold part 112 and the outsole 20 and into the inner space 22 and permitting the air in the inner space 22 to simultaneously evacuate through vent-holes (not shown) that extend through the bottom mold part 112 and the outsole 20; and permitting the foamable material in the inner space 22 to expand to thereby force the outsole 20, the insole 301 and the cover strip 21 to press against the inner wall 121 of the mold 100 so as to form a foamed midsole 40 that is enclosed by and that is bonded to the outsole 20, the insole 301 and the cover strip 21.

Preferably, the peripheral portions 202, 3011 of the outsole 20 and the insole 301 are adhesively bonded to the cover strip 21 so as to be interconnected by the same before being placed in the mold cavity 122. More preferably, the peripheral portion 202 of the outsole 20 is adhesively bonded to the cover strip 21, and the peripheral portion 3011 of the insole 301 is stitched on the cover strip 21.

The cover strip 21 can be made of ethylene vinylacetate copolymer, rubber, resilient cloth, leather, and the like. Preferably, the cover strip 21 is made of ethylene vinylacetate copolymer. The foamable material employed in the method of this invention is preferably polyurethane.

The method of this invention can further includes the step of attaching a pair of flexible strips 140, 150 to the peripheral portion 3011 of the insole 301 before the step of closing the mold 100. The flexible strips 140, 150 have lower end edges surrounding the peripheral portion 3011 of the insole 301. The cover strip 21 having upper edges in abutment with the end edges of the flexible strips 140, 150 so as to prevent the foamable material from overflowing the upper edges of the cover strip 21 upon filling the foamable material into the inner space 22.

The molding temperature for forming the foamed midsole 40 of polyurethane is in a range of about 50 to 120°C. The inner wall 121 of the mold 100 can be patterned so that when the cover strip 21 is pressed against and is heated by the mold 100 upon foaming of the foamable material in the mold 100, the cover strip 21 can be patterned.

It is noted that instead of preparing the cover strip 21 and the outsole 20 as separate parts, the cover strip 21 can be integrally formed on the peripheral portion 202 of the outsole 20.

The method of this invention can further include a step of loading a filler 45 in the inner space 22 before the placement of the assembly of the outsole 20, the insole 301 and the cover strip 21 in the mold cavity 122 so that the filler 45 will be embedded in the foamed midsole 40 after formation of the foamed midsole 40. The filler 45 can be in the form of pellets, and can be made of a plastic material selected from a group consisting of ethylene vinylacetate copolymer, rubber, and polyurethane.

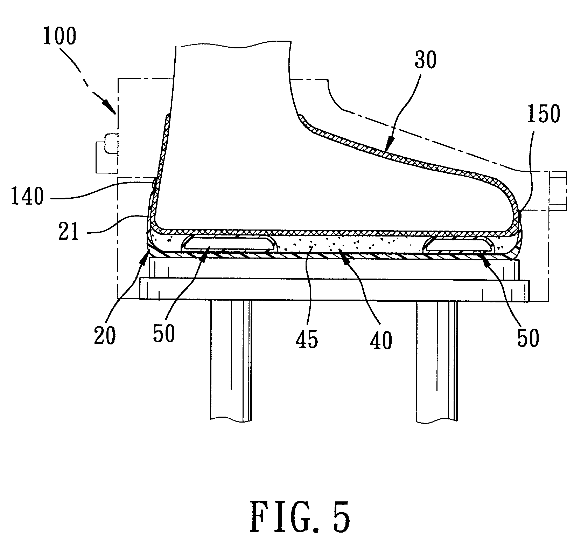

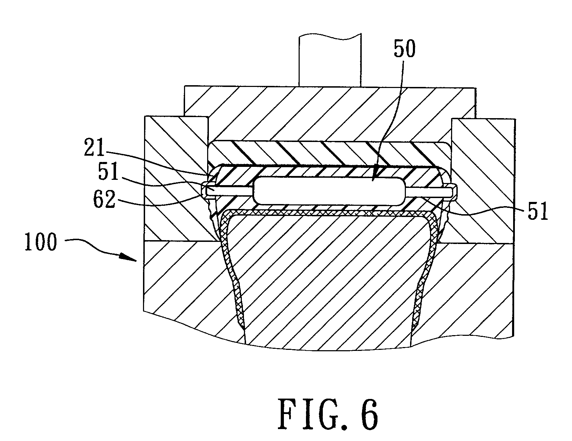

Referring now to Fig. 6, in combination with Fig. 5, the method of this invention can further include a step of disposing a plurality of cushioning pads 50, such as air units, in the inner space 22 before the placement of the assembly of the outsole 20, the insole 301 and the cover strip 21 in the mold cavity 122 so that the cushioning pads can be embedded in the foamed midsole 40 after formation of the foamed midsole 40. Each cushioning pad 50 can have extensions 51 extending through the cover strip 21 so as to be exposed from the cover strip 21. As such, the inner wall 121 of the mold 100 is provided with positioning holes 103 for receiving the extensions 51 during the formation of the foamed midsole 40. Preferably, the extensions 51 are provided with sleeves 62 which are received in the positioning holes 103 during the formation of the foamed midsole 40.

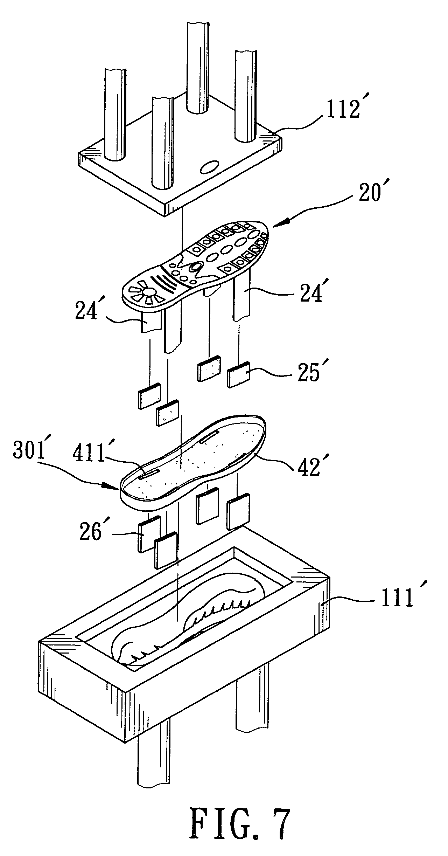

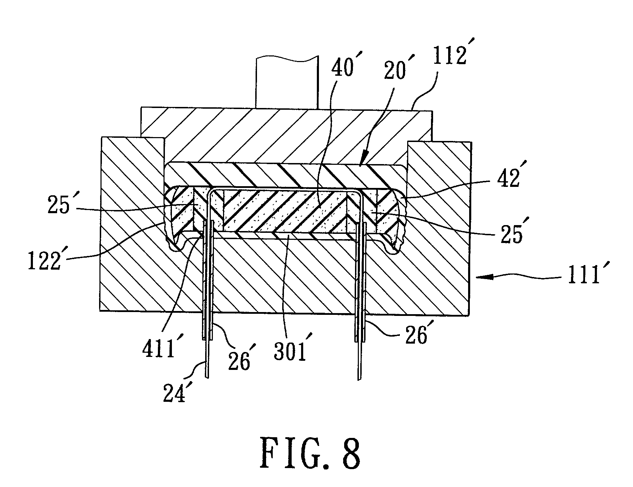

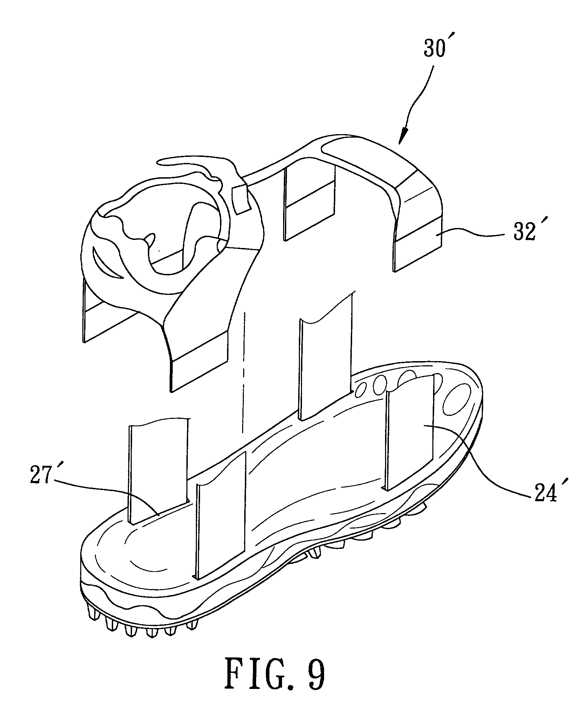

Figs. 7 to 9 illustrate how a sandal is made according to the method of this invention. The sandal includes an outsole 20', an insole 301' with an upper flange 42' disposed over and connected to the outsole 20', a foamed midsole 40' formed according to the method of this invention and enclosed by the outsole 20' and the insole 301', and a strap unit 30' having four end portions 32'.

The outsole 20' is provided with a pair of linking straps 24' having end portions which are stitched onto the end portions 32' of the strap unit 30'. The insole 301' is formed with four slits 411' for passage of the end portions of the linking straps 24'. Before the formation of the foamed midsole 40', the insole 301' and the outsole 20' are respectively mounted on the upper mold part 111' and the bottom mold part 112', and four positioning sleeves 26' and four support sleeves 25' are provided and are disposed in a manner that the four positioning sleeves 26' extend through the upper mold part 111' and respectively into the slits 411', that the four support sleeves 25' are disposed between the outsole 20' and the insole 301' at the slits 411' and respectively receive the end portions of the linking straps 24' , and that the end portions of the linking straps 24' extend outwardly of the upper mold part 111' through the positioning sleeves 26'. After the formation of the foamed midsole 40', the positioning sleeves 26' can be removed from the upper mold part 111', and the end portions of the linking straps 24' can be stitched onto the end portions 32' of the strap unit 30' after the removal of the upper and bottom mold parts 111', 112'. It is noted that the end portions 32' of the strap unit 30' can be stitched onto the end portions of the linking straps 24' and the thus formed assembly is then disposed in the mold cavity 122' for subsequent processing steps for the formation of the foamed midsole 40'.

Since the foamed midsole 40' is enclosed by the outsole 20(20'), the insole 301(301'), and/or the cover strip 21, the drawbacks as encountered in the prior art can be eliminated.

## Claims

1. A method for making a shoe, **characterized by**:
preparing an outsole (20) having an upper surface (201) and a peripheral portion (202);
preparing an upper (30) having a bottom portion that defines an insole (301) having a peripheral portion (3011) which is to be disposed over said peripheral portion (202) of said outsole (20);
preparing a cover strip (21) that is to be disposed between and that is to interconnect said outsole (20) and said insole (301);
preparing a mold (100) that has an inner wall (121) defining a mold cavity (122), an upper mold part (111) with a last (110), a bottom mold part (112) opposite to said upper mold part (111), and at least two opposite side mold parts (113);
placing said outsole (20), said upper (30) and said cover strip (21) in said mold cavity (122) such that said outsole (20) is mounted on said bottom mold part (112), that said upper (30) is fittingly sleeved on said last (110) with said insole (301) being disposed over said outsole (20), and that said peripheral portions (3011, 202) of said insole (301) and said outsole (20) are interconnected by said cover strip (21) so as to confine an inner space (22) thereamong;
closing said mold (100);
filling a foamable material into said inner space (22); and
permitting said foamable material in said inner space (22) to expand to thereby force said outsole (20), said insole (301) and said cover strip (21) to press against said inner wall (121) of said mold (100) so as to form a foamed midsole (40) that is enclosed by and that is bonded to said outsole (20), said insole (301) and said cover strip (21).

2. The method of Claim 1, **characterized in that** said outsole (20) and said insole (301) are interconnected by said cover strip (21) before being placed in said mold cavity (122).

3. The method of Claim 2, further **characterized in that** said outsole (20) and said insole (301) are adhesively bonded to said cover strip (21) so as to be interconnected thereby before being placed in said mold cavity (122).

4. The method of Claim 3, further **characterized by** heating said mold (100) to a molding temperature before the placement of the assembly of said outsole (20), said insole (301) and said cover strip (21) in said mold cavity (122).

5. The method of Claim 4, further **characterized by** filling a gas into said inner space (22) so as to force said outsole (20), said insole (301) and said cover strip (21) to press against said inner wall (121) of said mold (100) before the step of filling said foamable material into said inner space (22).

6. The method of Claim 5, **characterized in that** said inner wall (121) of said mold (100) is patterned, said cover strip (21) being pressed against and being heated by said mold (100) upon foaming of said foamable material in said mold (100) so as to be patterned by said mold (100).

7. The method of Claim 6, further **characterized in that** said cover strip (21) is made of ethylene vinylacetate copolymer, and said foamable material is made of polyurethane.

8. The method of Claim 2, further **characterized by** loading a filler (45) in said inner space before the placement of the assembly of said outsole (20) , said insole (301) and said cover strip (21) in said mold cavity (122), said filler (45) being in the form of pellets, and being made of a plastic material selected from a group consisting of ethylene vinylacetate copolymer, rubber, and polyurethane.

9. The method of Claim 2, further **characterized by** disposing a plurality of cushioning pads (50) in said inner space before the placement of the assembly of said outsole (20), said insole (301) and said cover strip (21) in said mold cavity (122).

10. The method of Claim 9, **characterized in that** each of said cushioning pads (50) is an air unit.

11. The method of Claim 1, further **characterized by** the step of attaching a pair of flexible strips (140, 150) to said peripheral portion (3011) of said insole (301) before the step of closing said mold (100), said flexible strips (140, 150) having lower end edges surrounding said peripheral portion (3011) of said insole (301), said cover strip (21) having upper edges in abutment with said end edges of said flexible strips (140, 150).

12. The method of Claim 1, further characeterized by the step of applying an adhesive layer (90) to said upper surface (201) of said outsole (20) before placing said outsole (20) in said mold (100).
